# EUROPEAN PATENT SPECIFICATION

(11) **EP 0 958 157 B1**
(45) Date of publication and mention of the grant of the patent: **09.01.2002**
(21) Application number: 98902131.6
(22) Date of filing: 03.02.1998
(51) Int. Cl.: B60P 3/22, B67D 5/04

(54) **PRODUCT RETURN SYSTEM**
RÜCKFÜHRUNGSSYSTEM
SYSTEME DE RETOUR DE PRODUIT

(30) Priority: 04.02.1997 GB 9702262
(43) Date of publication of application: 24.11.1999
(73) Proprietor: Maidment Tanker Services Limited, Littlehampton, West sussex BN17 5DF (GB)
(72) Inventor: LUCAS, Frederick, George, Graham, Seaford East Sussex BN25 2HS (GB); MIHELL, Derek, Portsmouth Hampshire PO7 8ST (GB); BREWER, Leslie, William, Bognor Regis West Sussex PO22 7SQ (GB); GILLESPIE, Eric, Brian, Bognor Regis West Sussex PO22 7QJ (GB)
(74) Representative: Grant, John Stephen Shirley
(86) International application number: GB9800329
(87) International publication number: WO9833675

(56) References cited:
- FR-A- 994 693
- FR-A- 1 057 315
- US-A- 3 216 619
- US-A- 3 360 000

## Description

The present invention relates to fluid delivery systems, and is particularly concerned with the metered delivery of bulk liquids from, for example, road tanker vehicles.

Delivery of bulk liquids such as fuel oil, kerosene, lubricating oil, etc from tanker vehicles is conventionally achieved by providing the tanker vehicle with a tank having a number of internal compartments, each of which can hold a different bulk liquid. Outlet pipes are connected from each of the internal divisions of the tank to the inlet of a pump, via a selector valve. The outlet of the pump is delivered to a metering device, and thence to a delivery tube. In conventional arrangements, the delivery tube is mounted on a hose reel, and is positioned either between the tank and the vehicle cab, or at the rear of vehicle.

When an amount of liquid is to be delivered from the vehicle to a receiving container, the appropriate internal division of the tank is selected using the selector valve, and the delivery hose is connected to the receptacle into which the liquid is to be delivered. Operating the pump causes liquid to flow from the tank into the receiving container, through the meter which records the amount of liquid delivered.

At the end of the delivery, a valve at the distal end of the delivery hose is closed and the hose is wound back onto the reel, still filled with the last liquid delivered.

When the tanker is to make its next delivery, if the liquid to be delivered is different from that delivered on the last call, the delivery system comprising the pump, the meter and the delivery hose, must first be emptied of the previous liquid and filled with the new liquid to be delivered. This is usually done by the tanker operator climbing onto the top of the tank, and inserting the end of the delivery hose into the internal division of the tank containing the liquid last delivered. The operator then selects the new liquid to be delivered, and operates the pump so as to draw off enough of the new liquid to fill the delivery system. This volume is a constant known volume and thus by delivering this amount of the new liquid, the pump, the meter and the delivery hose are purged of the previous liquid, which is returned to the tank. The tanker operator may then attach the delivery hose to the receiving container, and operate the pump to deliver the amount of the new liquid required. Clearly, such procedures of purging the delivery hose are time-consuming, particularly in single man operated vehicles. The possibility exists of the operator returning the purged liquid to the wrong compartment of the tank, and thus contaminating its contents. There is also a risk of the operative becoming injured or falling from the top of the tanker vehicle, particularly when liquids such as lubricating oil are being handled as spillages invariably occur.

An arrangement for emptying one or more tanks of fuel, particularly high-octane aircraft fuel, is disclosed in French Specification No. FR-A-1,057,315; however, there is no disclosure of a return pipe or corresponding circuitry for returning fuels to one or other of the storage tanks and while tanks may be re-charged after emptying, it must be presumed that re-charging takes place through the caps 3 and 4 provided in the tops of the tanks. Also, in the absence of relevant disclosure, it must be presumed that re-charging of the tanks, via the caps 3 and 4, is effected by an operative who climbs onto the upper structure of the fuel tanks. This is precisely the kind of dangerous activity that the present invention seeks to eliminate.

Another arrangement, disclosed in French Specification No. FR-A-994,693, has means, viz. a flexible hose 54 and intakes 48' and 49', whereby fuel may be recovered from external sources or from an aircraft when emptying its tanks or balancing the fuel in one tank with the fuel in other of the aircraft's fuel tanks.

The fuel recovered in fed to an appropriate one of the arrangement's storage tanks 1, 2 or 3 by connecting one of the distributor hoses 33 or 44 to one of the connectors 58, 59 or 60.

A major drawback of the arrangement provide by FR-A-994,693 is that no means are provided for ensuring that the fuel recovery lines are purged of the recovered fuel or that the distribution hoses are cleared of a first fuel of one octane before delivery therethrough of a second fuel of another octane. Thus, some cross-contamination of fuels fed to a receiving tank is unavoidable.

It is an objective of the present invention to provide a product return system which enables rapid purging of the delivery system without the need for the tanker operator to climb on top of the vehicle carrying a heavy hose, and can be automated to prevent contamination.

The invention thus provides a bulk delivery system suitable for use in a road tanker, the system comprising a plurality of storage volumes each connectable to the inlet of a pump via duct means and selector means, a metering means to measure the output of a first fluid from the pump, and a delivery hose connected to the outlet of the pump and having a delivery nozzle at its end remote from the pump, the system further comprising return means extending from at least one inlet nozzle to communicate selectively with one of the storage volumes, characterised in that the delivery nozzle being connectable to the at least one inlet nozzle to deliver the first fluid into the at least one inlet nozzle when the system is in use and the pump is operated to selectively deliver a second fluid from another of the storage volumes to displace the first fluid from said delivery hose and to cause it to be delivered via the return means to a selected one of the storage volumes whereby the delivery hose is purged of the first fluid as it is filled with a second fluid, the system also comprising evacuating means whereby the first fluid is evacuated from the return means.

Conveniently, the selector means may comprise a selector valve or valves.

In one convenient arrangement provided by the present invention, the selector means may be a hose connected at one end to an inlet of the pump and connectable at its other end via a respective one of the duct means to an associated one of the storage volumes.

Preferably, the storage volumes are internal compartments within a single tank or the storage volumes are each provided by a separate tank.

The invention also provides a system according to any one of the last four preceding paragraphs wherein the evacuating means, whereby a fluid is evacuated from the return means, comprises a pressurised gas reservoir having valve means operable, when the system is in use, to inject gas under pressure into the return means to expel fluids therefrom.

Preferably, the evacuating means comprises a pressurised air reservoir.

Conveniently, the present invention also provides a method of purging a first fluid from a fuel delivery hose of a bulk delivery system of a road tanker with a second fluid comprising the steps of:
a) disconnecting the delivery hose from a first storage volume of a first fluid and connecting the delivery hose via respective duct means to a second storage volume of a second fluid by operating a selector valve of a selector means;
b) connecting an output end of the delivery hose to an input end of a return means;
c) connecting an output end of the return means to the first storage volume;
d) delivering a metered quantity of a second fluid into the delivery hose to displace the first fluid;
e) allowing the first fluid so displaced to pass through the return means to the first storage volume;
f) disconnecting the delivery hose from the return means when the delivery hose is purged of the first fluid; and
g) operating an evacuating means whereby gas under pressure is caused to evacuate the return means of the first fluid and to return it to the first storage volume via its associated valve.

The present invention also conveniently provides a method of purging a first fluid from a fuel delivery hose of a bulk delivery system of a road tanker with a second fluid comprising the steps of:
a) disconnecting the delivery hose from a first storage volume of a first fluid and connecting the delivery hose, via a hose, connected at one end to the inlet of a pump and connectable at its other end to a respective one of the outlets of the storage volumes, to a second storage volume of a second fluid by attaching the hose to a respective one of the outlets;
b) connecting an output end of the delivery hose to an input end of a return means;
c) connecting an output end of the return means to the first storage volume;
d) delivering a metered quantity of a second fluid into the delivery hose to displace the first fluid;
e) allowing the first fluid so displaced to pass through the return means to the first storage volume;
f) disconnecting the delivery hose from the return means when the delivery hose is purged of the first fluid; and,
g) operating an evacuating means whereby gas under pressure is caused to evacuate the return means of the first fluid and to return it to the first storage volume.

Preferably, the method according to either one of the last two preceding paragraphs includes evacuating the fluid to a storage volume by air under pressure.

In one preferred embodiment of the invention the method is effected manually.

More preferably, however, the method is effected under the control of hydraulic, electromechanical or pneumatic actuators or a combination of such means under the control or otherwise of a microprocessor.

An embodiment of the invention will now be described in detail, with reference to the accompanying drawings, in which:
Figure 1 shows schematically the ducting layout of a first embodiment of the system; and
Figure 2 shows schematically a second embodiment of the system.

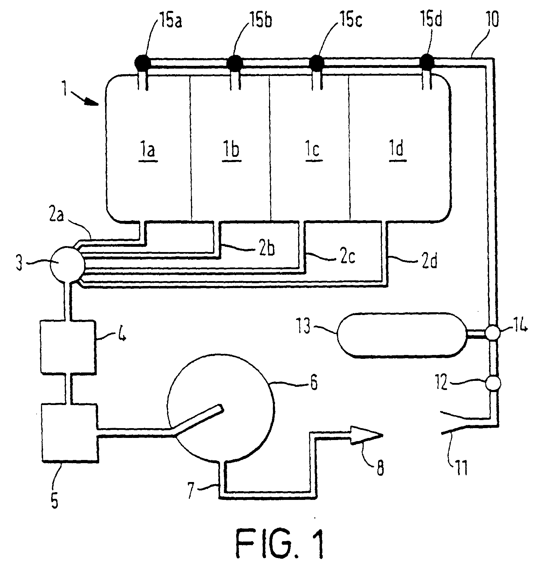

Referring now to Figure 1, a tank of, for example, a road tanker vehicle is generally designated by reference numeral 1. The tank 1 is divided into four internal divisions of differing volumes, 1a, 1b, 1c and 1d, but may be divided only into two, or into a larger number of divisions. Each of the internal divisions is provided with a respective delivery duct 2a, 2b, 2c and 2d. The delivery ducts 2a to 2d lead from the tank 1 to a selector valve 3. The arrangement of the selector valve 3 is such that any one of the ducts 2a to 2d may be connected to the outlet of the selector valve 3, while the other three ducts are closed off.

The outlet of the selector valve 3 leads to the inlet of a pump 4, which delivers liquid to metering device 5 and thence to a delivery hose reel 6 on which is coiled a flexible delivery hose 7. A delivery nozzle 8 is fitted to the end of the delivery hose 7. As an alternative to the valve 3, a hose attached to the inlet of the pump 4 may be selectively connectable to one of the outlet ducts 2a to 2d.

In order to deliver a liquid from one of the internal divisions of the tank 1, the selector valve or hose 3 is operated to connect the relevant duct 2a to 2d to the pump 4, and the pump 4 is then operated until the meter 5 shows that the required amount of liquid has been delivered. Clearly, the internal divisions 1a to 1d of the tank 1 may contain different liquids. When the pump 4, meter 5, and delivery hose 7 are filled with a first liquid, for example from division 1a, and a second liquid, for example from division 1b, is to be delivered, then the delivery system, comprising of pump 4, meter 5 and hose 7 must be cleared of the first liquid and filled with the second. This is generally done by arranging for the delivery system to be purged as it completes one delivery with the liquid to be delivered at the next call. If, however, the delivery cannot be completed, the purging can be done using the purging system of the present invention, which comprises a return pipe 10, which leads from an inlet nozzle 11 to the tank 1. The return pipe 10 includes a valve 12 situated adjacent to the nozzle 11 to prevent any liquid flowing back out of the nozzle 11. Adjacent the valve 12 is a further valve 14, which has two operating positions. In a first operating position, the valve 14 allows fluid to pass from the non-return valve 12 along the vertical section of the return pipe 10. In its second operating position, the valve 14 connects a high-pressure air reservoir 13 to the interior of the return pipe 10.

The return pipe 10 is connected to each of the internal divisions of the tank 1 by means of a respective valve 15a to 15d.

When the delivery system 3, 4, 5, 6, 7, 8 is filled with a first liquid, and a second liquid is to be delivered, the tanker operator connects the delivery nozzle 8 to the inlet nozzle 11, and sets valve 14 into its first position. One of the valves 15 is opened, to connect the return pipe 10 with the division 1a to 1d into which the liquid from the delivery system is to be discharged. The selector valve 3 is then operated to select the new liquid to be delivered, and the pump 4 is then operated to deliver a volume of liquid equal to the volume contained in the delivery system 3, 4, 5, 6, 7, 8.

This causes the first liquid which is within the delivery system 3, 4, 5, 6, 7, 8 to be ejected through the nozzle 8, and into the return pipe 10. This liquid then flows through the return pipe 10, and out of the appropriate valve 15 to be delivered into the sub-division 1a of the tank 1 from whence the first liquid was drawn.

When the required volume has been passed through the meter 5, the pump 4 is stopped. The delivery hose 7 is now filled with the second liquid, and the delivery nozzle 8 may be disconnected from the inlet nozzle 11 and used to make the delivery of the second liquid.

In order to clear the return pipe 10 of any remaining first liquid, the valve 14 is moved to its second position and high-pressure air from the reservoir 13 is admitted into the return pipe 10 to blow through any remaining liquid into the appropriate division of tank 1 through its respective valve 15. Clearly, the return pipe 10 may be blown through either before or after the nozzle 8 is disconnected. Advantageously, the inlet nozzle 11 is positioned at a convenient location to the tanker operator, preferably adjacent the delivery hose reel 6. This enables the delivery nozzle 8 to be connected to the input nozzle 11 with the delivery hose 7 accommodated on the reel 6. It is further foreseen that a mechanical, electrical, or other interlock may prevent operation of the purging system unless the delivery nozzle 8 is connected to inlet nozzle 11.

Although the system described above includes a single inlet nozzle 11, linked by a single return pipe 10 to all of the internal divisions 1a to 1d of the tank via respective valves, it is foreseen that each sub-division 1a to 1d of the tank may have its own dedicated return pipe 10 and its own dedicated input nozzle 11. This will avoid the need for valves 15, but will require the delivery nozzle 8 to be connected to the correct inlet nozzle 11 for each purging operation. In a further alternative, the inlet nozzle 11 may be connected to a second selector valve similar to the selector valve 3, which is linked to each division of the tank 1 by a respective return pipe.

In a preferred embodiment of the invention, the valves 15 and the selector valve 3 are linked to control circuitry which includes memory means to store information in relation to the last liquid to be delivered. Input means are provided to the control circuity which allow the operator to select the liquid to be delivered, and the control circuitry then compares the liquid to be delivered with the liquid previously delivered. If they are different, the control circuitry will operate the selector valve 3 and the relevant valve 15, and will control the operation of the pump 4 to deliver a metered amount of the new liquid into the delivery hose 7, once the delivery nozzle 8 has been connected to the input nozzle 11. The control circuitry may also operate the valve 14 to blow the remaining liquid out of the return pipe 10 when the necessary volume of new liquid has been delivered to fill the delivery system 3, 4, 5, 6, 7, 8. The tanker operator may then disconnect the delivery nozzle 8 from the input nozzle 11, and proceed with the delivery of the new liquid to the customer. If the system is operated in such a way that, at the end of each delivery the tanker operator connects the delivery nozzle 8 to the input nozzle 11, and if the control circuitry includes its input means positioned within the tanker's cab, it can be foreseen that after each delivery the operator can simply connect delivery nozzle 8 to the input nozzle 11, and then enter the cab and drive to the next delivery point. While in transit, it will be possible for the operator to select the next liquid to be delivered and the system can automatically undertake any purging of the delivery system 3, 4, 5, 6, 7, 8 and return pipe 10 while the tanker is in motion. This will ensure that, when the tanker arrives at the next delivery point the delivery system 3, 4, 5, 6, 7, 8 is already filled with the correct liquid for delivery to commence. Operating time will therefore be saved, increasing the efficiency of the vehicle.

While the delivery system has been described above in relation to bulk liquids such as fuel oils, kerosene, etc, it is foreseen that the system can equally well be applied to other liquids or to gases in gaseous or liquid form.

It is further foreseen that a conventional tanker vehicle may be fitted with the return pipe 10 of the present invention, in order to convert an existing tanker vehicle to a vehicle operating the delivery system of the present invention.

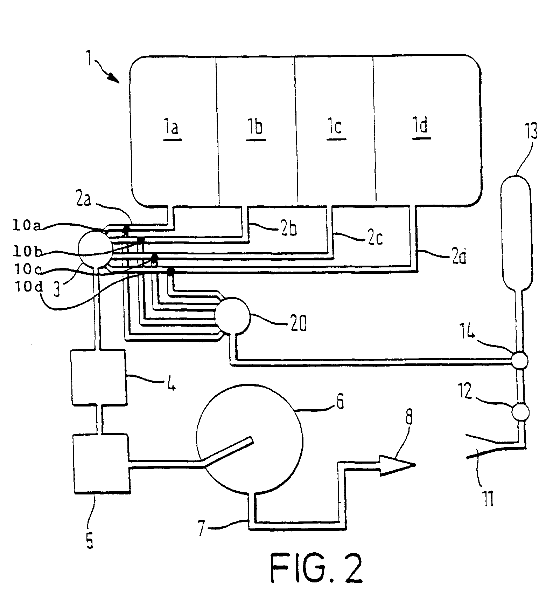

Figure 2 shows an alternative embodiment of the return system, similar to that of Figure 1. In the embodiment shown in Figure 2, the inlet nozzle 11 and non-return valve 12 are connected, via an air valve 14, to a second selector valve or valves 20 whose outlets are connected to respective outlet ducts 2a, 2b, 2c and 2d from the tank 1. Non-return valves (not shown in detail) may be provided and as indicated in Figure 2 at 10a, 10b, 10c and 10d, in the ducts downstream of selector valve or valves 20. In use, selector valve or valves 20 are used in place of valves 15 to direct the liquid back into its correct compartment.

Control of the various valves 3, 14, 15 and 20 may be by manual operating handles or handwheels, or by actuators such as hydraulic or electromechanical or pneumatic actuators. Control of the operation of the valves 3, 14, 15 and 20 and the pump 4 may be manual, with the operator controlling the various valves and pump in the correct sequence. Alternatively, the system may be automated by placing the valves and pump under microprocessor control.

## Claims

1. A bulk delivery system suitable for use in a road tanker (1), the system comprising a plurality of storage volumes (1a, 1b, 1c, 1d) each connectable to the inlet of a pump (4) via duct means (2a, 2b, 2c, 2d) and a selector means (3), a metering means (5) to measure the output of a first fluid from the pump (4), and a delivery hose (7) connected to the outlet of the pump (4) and having a delivery nozzle (8) at its end remote from the pump (4), the system further comprising return means (10) extending from at least one inlet nozzle (11) to communicate selectively with one of the storage volumes, **characterised in that** the delivery nozzle (8) is connectable to the at least one inlet nozzle (11) to deliver the first fluid into the at least one inlet nozzle (11) when the system is in use and the pump (4) is operated to selectively deliver a second fluid from another of the storage volumes (1a, 1b, 1c, 1d) to displace the first fluid from said delivery hose (7) and to cause it to be delivered via the return means (10) to a selected one of the storage volumes (1a, 1b, 1c, 1d) whereby the delivery hose (7) is purged of the first fluid as it is filled with a second fluid, the system also comprising evacuating means (13, 14) whereby the first fluid is evacuated from the return means (10).

2. A system according to Claim 1 **characterised in that** the selector means (3) comprises a selector valve or valves.

3. A system according Claim 1 **characterised in that** the selector means (3) is a hose connected at one end to the inlet of the pump (4), and connectable at its other end via a respective one of the duct means (2a, 2b, 2c, 2d) to an associated one of the storage volumes (1a, 1b, 1c, 1d).

4. A system according to any one of the preceding Claims in which the storage volumes (1a, 1b, 1c, 1d) are internal compartments within a single tank.

5. A system according to any one of Claims 1 to 3 in which the storage volumes (1a, 1b, 1c, 1d) are each provided by a separate tank.

6. A system according to any one of the preceding Claims **characterised in that** the evacuating means, whereby a fluid is evacuated from the return means (10), comprises a pressurised gas reservoir (13) having valve means (14, 20) operable, when the system is in use, to inject gas under pressure into the return means (10) to expel fluids therefrom.

7. A system according to Claim 6 **characterised in that** the evacuating means comprises a pressurised air reservoir.

8. A method of purging a first fluid from a fuel delivery hose (7) of a bulk delivery system of a road tanker (1) with a second fluid comprising the steps of:
a) disconnecting the delivery hose (7) from a first storage volume (1a, 1b, 1c, 1d) of a first fluid and connecting the delivery hose (7) via respective duct means (2a, 2b, 2c, 2d) to a second storage volume (1a, 1b, 1c, 1d) of a second fluid by operating a selector valve (3) of a selector means;
b) connecting an output end (8) of the delivery hose (7) to an input end (11) of a return means (10);
c) connecting an output end of the return means (10) to the first storage volume (1a, 1b, 1c, 1d);
d) delivering a metered quantity of a second fluid into the delivery hose (7) to displace the first fluid;
e) allowing the first fluid so displaced to pass through the return means (10) to the first storage volume (1a, 1b, 1c, 1d);
f) disconnecting the delivery hose (7) from the return means (10) when the delivery hose (7) is purged of the first fluid; and,
g) operating an evacuating means (13, 14) whereby gas under pressure is caused to evacuate the return means (10) of the first fluid and to return it to the first storage volume (1a, 1b, 1c, 1d) via its associated valve (15a, 15b, 15c, 15d).

9. A method of purging a first fluid from a fuel delivery hose (7) of a bulk delivery system of a road tanker (1) with a second fluid comprising the steps of:
a) disconnecting the delivery hose (7) from a first storage volume (1a, 1b, 1c, 1d) of a first fluid and connecting the delivery hose (7) via a hose, connected at one end to the inlet of a pump (4) and connectable at its other end to a respective one of the outlets of the storage volumes (1a, 1b, 1c, 1d), to a second storage volume (1a, 1b, 1c, 1d) of a second fluid by attaching the hose to a respective one of the outlets;
b) connecting an output end (8) of the delivery hose (7) to an input end (11) of a return means (10);
c) connecting an output end of the return means (10) to the first storage volume (1a, 1b, 1c, 1d);
d) delivering a metered quantity of a second fluid into the delivery hose (7) to displace the first fluid;
e) allowing the first fluid so displaced to pass through the return means (10) to the first storage volume (1a, 1b, 1c, 1d);
f) disconnecting the delivery hose (7) from the return means (10) when the delivery hose (7) is purged of the first fluid; and,
g) operating an evacuating means (13, 14) whereby gas under pressure is caused to evacuate the return means (10) of the first fluid and to return it to the first storage volume (1a, 1b, 1c, 1d).

10. A method according to either one of Claims 8 and 9 wherein the fluid is evacuated to a storage volume (1a, 1b, 1c, 1d) by air under pressure.

11. A method according to any one of Claims 8 to 10 wherein the method is effected manually.

12. A method according to any one of Claims 8 to 10 wherein the method is effected under the control of hydraulic, electromechanical or pneumatic actuators or a combination of such means under the control or otherwise of a microprocessor.

## Patentansprüche

1. Ein Fördersystem für Ladeflüssigkeiten, geeignet für den Einsatz in Straßentankfahrzeugen (1), das aus mehreren Speicherkammem (1a, 1b, 1c, 1d), die über Leitungseinrichtungen (2a, 2b, 2c, 2d) mit dem Einlass einer Pumpe (4) verbunden werden können, einer Wahlvorrichtung (3), einer Messvorrichtung (5) zur Ermittlung der Fördermenge der ersten Flüssigkeit der Pumpe (4) und einem Druckschlauch (7) besteht, der mit dem Auslass der Pumpe (4) verbunden ist und eine Auslassdüse (8) am der Pumpe (4) entgegengesetzten Ende aufweist; das System umfasst femer eine Rückführeinrichtung (10) von mindestens einer Einlassdüse (11) zu einer ausgewählten Speicherkammer, **gekennzeichnet dadurch, dass** die Auslassdüse (8) an wenigstens eine Einlassdüse (11) angeschlossen werden kann, damit die erste Flüssigkeit in wenigstens eine Einlassdüse (11) gelangt, wenn das System in Betrieb ist und die Pumpe (4) eine zweite Flüssigkeit aus einer anderen Speicherkammer (1a, 1b, 1c, 1d) selektiv fördert, um die erste Flüssigkeit aus dem Druckschlauch (7) zu verdrängen, und diese über die Rückführeinrichtung (10) in eine der Speicherkammern (1a, 1b, 1c, 1d) fließen lässt, wobei die erste Flüssigkeit in dem Zuge, wie die zweite Flüssigkeit eingefüllt wird, aus dem Druckschlauch verdrängt wird; ebenso umfasst das System eine Entleerungseinrichtung (13, 14), mit deren Hilfe die erste Flüssigkeit aus der Rückführeinrichtung (10) ausgetragen wird.

2. Ein System nach Anspruch 1, **gekennzeichnet dadurch, dass** die Wahlvorrichtung (3) ein Mehrwegeventil oder-ventile umfasst.

3. Ein System nach Anspruch 1, **gekennzeichnet dadurch, dass** die Wahlvorrichtung (3) ein Schlauch ist, der an einem Ende an den Einlass der Pumpe (4) und am anderen Ende über eine der Leitungseinrichtungen (2a, 2b, 2c, 2d) an eine Speicherkammer (1a, 1b, 1c, 1d) angeschlossen ist.

4. Ein System nach einem der vorstehenden Ansprüche, **gekennzeichnet dadurch, dass** die Speicherkammem (1a, 1b, 1c, 1d) Innenkammern eines Tanks sind.

5. Ein System nach einem der vorstehenden Ansprüche 1 bis 3, **gekennzeichnet dadurch, dass** die einzelnen Speicherkammern (1a, 1b, 1c, 1d) jeweils einen separaten Tank darstellen.

6. Ein System nach einem der vorstehenden Ansprüche, **gekennzeichnet dadurch, dass** die Entleerungseinrichtung (10), die dem Ablassen der Flüssigkeit aus der Rückführeinrichtung (10) dient, einen Druckgasbehälter (13) mit Ventilen (14, 20) umfasst, die, wenn das System in Betrieb ist, dazu dienen, Gas unter Druck in die Rückführeinrichtung (10) zu leiten, so dass die darin befindliche Flüssigkeit verdrängt wird.

7. Ein System nach Anspruch 6, **gekennzeichnet dadurch, dass** die Entleerungseinrichtung einen Druckluftbehälter beinhaltet.

8. Eine Methode zum Entfernen einer ersten Flüssigkeit aus einem Kraftstoffförderschlauch (7) eines Fördersystems für Ladeflüssigkeiten für ein Straßentankfahrzeug mit Hilfe einer zweiten Flüssigkeit, welche die folgenden Schritte umfasst:
a) Abbau des Druckschlauchs (7) von der ersten Speicherkammer (1a, 1b, 1c, 1d) für die erste Flüssigkeit und Anschluss des Druckschlauchs (7) über die jeweilige Leitungseinrichtung (2a, 2b, 2c, 2d) an eine zweite Speicherkammer (1a, 1b, 1c, 1d) für eine zweite Flüssigkeit, indem ein Wegeventil (3) einer Wahlvorrichtung betätigt wird.
b) Anschluss des Ausgangs (8) eines Druckschlauchs (7) an den Eingang (11) einer Rückführeinrichtung (10)
c) Anschluss des Ausgangs der Rückführeinrichtung (10) an die erste Speicherkammer (1a, 1b, 1c, 1d)
d) Förderung einer abgemessenen Menge einer zweiten Flüssigkeit in den Druckschlauch (7) zwecks Verdrängung der ersten Flüssigkeit
e) Zurückfließen der so verdrängten ersten Flüssigkeit über die Rückführeinrichtung (10) in die erste Speicherkammer (1a, 1b, 1c, 1d)
f) Abbau des Druckschlauchs (7) von der Rückführeinrichtung (10), nachdem die erste Flüssigkeit aus dem Druckschlauch (7) abgelaufen ist, und
g) Betätigung einer Entleerungseinrichtung (13, 14), wobei die erste Flüssigkeit mittels eines unter Druck stehenden Gases aus der Rückführeinrichtung (10) entfernt und über das jeweilige Ventil (15a, 15b, 15c, 15d) in die erste Speicherkammer (1 a, 1b, 1c, 1d) zurückgeführt wird

9. Eine Methode zum Entfemen einer ersten Flüssigkeit aus einem Kraftstoffförderschlauch (7) eines Fördersystems für Ladeflüssigkeiten für ein Straßentankfahrzeug mit Hilfe einer zweiten Flüssigkeit, welche die folgenden Schritte umfasst:
a) Abbau des Druckschlauchs (7) von der ersten Speicherkammer (1a, 1b, 1c, 1d) für die erste Flüssigkeit und Anschluss des Druckschlauchs (7) über einen Schlauch, der an einem Ende an den Einlass einer Pumpe (4) angeschlossen ist und am anderen Ende an den Ausgang einer der Speicherkammem (1a, 1b, 1c, 1d) angeschlossen werden kann, an eine zweite Speicherkammer(1a, 1b, 1c, 1d) für eine zweite Flüssigkeit durch Anschluss des Schlauchs an den jeweiligen Ausgang
b) Anschluss des Ausgangs (8) eines Druckschlauchs (7) an einen Eingang (11) der Rückführeinrichtung (10)
c) Anschluss des Ausgangs der Rückführeinrichtung (10) an die erste Speicherkammer (1a, 1b, 1c, 1d)
d) Förderung einer abgemessenen Menge einer zweiten Flüssigkeit in den Druckschlauch (7) zwecks Verdrängung des ersten Flüssigkeit
e) Zurückfließen der so verdrängten ersten Flüssigkeit über die Rückführeinrichtung (10) in die erste Speicherkammer (1a, 1b, 1c, 1d)
f) Abbau des Druckschlauchs (7) von der Rückführeinrichtung (10), nachdem die erste Flüssigkeit aus dem Druckschlauch (7) abgelassen wurde, und
h) Betätigung einer Entleerungsvorrichtung (13, 14), wobei die erste Flüssigkeit mittels eines unter Druck stehenden Gases aus der Rückführeinrichtung (10) entfernt und in die erste Speicherkammer (1a, 1b, 1c, 1d) zurückgeführt wird

10. Eine Methode nach Anspruch 8 oder 9, **gekennzeichnet dadurch, dass** die Flüssigkeit mittels unter Druck stehender Luft entfernt und in die Speicherkammer (1a, 1b, 1c, 1d) geleitet wird.

11. Eine Methode nach Anspruch 8, 9 oder 10, **gekennzeichnet dadurch, dass** diese eine manuelle Betätigung vorsieht.

12. Eine Methode nach Anspruch 8, 9 oder 10, **gekennzeichnet dadurch, dass** diese eine hydraulische, elektromechanische oder pneumatische Betätigung oder einer Kombination solcher Vorrichtungen mit Mikroprozessorsteuerung vorsieht.

## Revendications

1. Système de distribution en vrac apte à être utilisé dans une citerne routière (1), le système comprenant une pluralité de volumes de stockage (1a, 1b, 1c, 1d) aptes à être connectés chacun à l'entrée d'une pompe (4) par l'intermédiaire de moyens de conduite (2a, 2b, 2c, 2d) et un moyen de sélection (3), un moyen de mesure (5) pour mesurer la sortie d'un premier fluide depuis la pompe (4) et un tuyau de distribution (7) relié à la sortie de la pompe (4) et ayant une buse de distribution (8) à son extrémité éloignée de la pompe (4), le système comprenant en outre un moyen de renvoi (10) s'étendant depuis au moins une buse d'entrée (11) pour communiquer sélectivement avec un des volumes de stockage, **caractérisé en ce que** la buse de distribution (8) est apte à être connectée à ladite au moins une buse d'entrée (11) pour délivrer le premier fluide dans ladite au moins une buse (11) lorsque le système est en utilisation et la pompe (4) est actionnée pour délivrer sélectivement un second fluide depuis un autre des volumes de stockage (1a, 1b, 1c, 1d) pour déplacer le premier fluide depuis ledit tuyau de distribution (7) et pour l'amener à être délivré via le moyen de renvoi (10) à l'un sélectionné des volumes de stockage (1a, 1b, 1c, 1d), le tuyau de distribution (7) étant purgé du premier fluide lorsqu'il est rempli d'un second fluide, le système comprenant également des moyens de vidage (13, 14) grâce auxquels le premier fluide est vidé dudit moyen de renvoi (10).

2. Système selon la revendication 1, **caractérisé en ce que** le moyen de sélection (3) comprend une ou des vannes de sélection.

3. Système selon la revendication 1, **caractérisé en ce que** le moyen de sélection (3) est un tuyau connecté à une extrémité à l'entrée de la pompe (4) et apte à être connecté à son autre extrémité via une extrémité respective des moyens de conduite (2a, 2b, 2c, 2d) à l'un, associé, des volumes de stockage (1a, 1b, 1c, 1d).

4. Système selon l'une quelconque des revendications précédentes, dans lequel les volumes de stockage (1a, 1b, 1c, 1d) sont des compartiments internes dans un seul réservoir.

5. Système selon l'une quelconque des revendications 1 à 3, dans lequel les volumes de stockage (1a, 1b, 1c, 1d) sont réalisés chacun par un réservoir séparé.

6. Système selon l'une quelconque des revendications précédentes, **caractérisé en ce que** les moyens d'évacuation grâce auxquels un fluide est évacué du moyen de renvoi (10) comprennent un réservoir de gaz sous pression (13) possédant des moyens formant soupape (14, 20) actionnables, lorsque le système est en utilisation pour injecter des gaz sous pression dans le moyen de renvoi (10) pour en expulser les fluides.

7. Système selon la revendication 6, **caractérisé en ce que** les moyens d'évacuation comprennent un réservoir d'air sous pression.

8. Procédé pour purger un premier fluide d'un tuyau de distribution de carburant (7) d'un système de distribution en vrac d'une citerne routière (1) avec un second fluide, comprenant les étapes consistant à :
a) déconnecter le tuyau de distribution (7) d'un premier volume de stockage (1a, 1b, 1c, 1d) d'un premier fluide et connecter le tuyau de distribution (7) via des moyens de conduite respectifs (2a, 2b, 2c, 2d) à un second volume de stockage (1a, 1b, 1c, 1d) d'un second fluide, en actionnant une vanne de sélection (3) d'un moyen de sélection ;
b) connecter une extrémité de sortie (8) du tuyau de distribution (7) à une extrémité d'entrée (11) d'un moyen de renvoi (10) ;
c) connecter une extrémité de sortie du moyen de renvoi (10) au premier volume de stockage (1a, 1b, 1c, 1d) ;
d) délivrer une quantité dosée d'un second fluide dans le tuyau de distribution (7) pour déplacer le premier fluide ;
e) permettre au premier fluide ainsi déplacé de passer à travers le moyen de renvoi (10) vers le premier volume de stockage (1a, 1b, 1c, 1d);
f) déconnecter le tuyau de distribution (7) du moyen de renvoi (10) lorsque le tuyau de distribution (7) est purgé du premier fluide ; et,
g) actionner un moyen de vidage (13, 14) grâce à quoi un gaz sous pression est amené à vider le premier fluide du moyen de renvoi (10) et à le ramener au premier volume de stockage (1a, 1b, 1c, 1d) via sa vanne associée (15a, 15b, 15c, 15d).

9. Procédé pour purger un premier fluide d'un tuyau de distribution de carburant (7) d'un système de distribution en vrac d'une citerne routière (1) avec un second fluide, comprenant les étapes consistant à :
a) déconnecter le tuyau de distribution (7) d'un premier volume de stockage (1a, 1b, 1c, 1d) d'un premier fluide et connecter le tuyau d'alimentation (7) via un tuyau, connecté à une extrémité à l'entrée d'une pompe (4) et apte à être connecté à son autre extrémité à une extrémité respective des sorties des volumes de stockage (1a, 1b, 1c, 1d) à un second volume de stockage (1a, 1b, 1c, 1d) d'un second fluide en attachant le tuyau à une, respective des sorties ;
b) connecter une extrémité de sortie (8) du tuyau de distribution (7) à une extrémité d'entrée (11) d'un moyen de renvoi (10) ;
c) connecter une extrémité de sortie du moyen de renvoi (10) au premier volume de stockage (1a, 1b, 1c, 1d) ;
d) délivrer une quantité dosée d'un second fluide dans le tuyau de distribution (7) pour déplacer le premier fluide ;
e) permettre au premier fluide ainsi déplacé de passer à travers le moyen de renvoi (10) vers le premier volume de stockage (1a, 1b, 1c, 1d) ;
f) déconnecter le tuyau de distribution (7) du moyen de renvoi (10) lorsque le tuyau de distribution (7) est purgé du premier fluide ; et,
g) actionner un moyen de vidage (13, 14) grâce à quoi du gaz sous pression est amené à vider le premier fluide du moyen de renvoi (10) et le ramener dans le premier volume de stockage (1a, 1b, 1c, 1d).

10. Procédé selon l'une quelconque des revendications 8 et 9, dans lequel le fluide est vidé vers un volume de stockage (1a, 1b, 1c, 1d) par de l'air sous pression.

11. Procédé selon l'une quelconque des revendications 8 à 10, dans lequel le procédé est mis en oeuvre manuellement.

12. Procédé selon l'une quelconque des revendications 8 à 10, dans lequel le procédé est mis en oeuvre sous la commande d'actionneurs hydrauliques, électro-mécaniques ou pneumatiques ou une combinaison de tels moyens sous la commande ou autrement d'un microprocesseur.
